**Europäisches Patentamt**

**European Patent Office**

**Office européen des brevets**

(19)

(11) Veröffentlichungsnummer : **0 032 580**
**B1**

# EUROPÄISCHE PATENTSCHRIFT

(12)

(45) Veröffentlichungstag der Patentschrift :
26.09.84

(51) Int. Cl.³ : **G 11 B   5/60**

(21) Anmeldenummer : **80108129.0**

(22) Anmeldetag : **22.12.80**

(54) **Magnetkopfhalterung für Plattenspeicher.**

(30) Priorität : **17.01.80 DE 3001655**

(43) Veröffentlichungstag der Anmeldung :
**29.07.81 Patentblatt 81/30**

(45) Bekanntmachung des Hinweises auf die Patenterteilung : **26.09.84 Patentblatt 84/39**

(84) Benannte Vertragsstaaten :
**AT BE CH FR GB IT LI LU NL SE**

(56) Entgegenhaltungen :
**FR-A- 2 282 690**
**IBM JOURNAL OF RESEARCH AND DEVELOPMENT,**
**BND I(; Nr. 6, November 1974, Seiten 489-505 R.B.**
**MULVANY: "Engineering design of a disk storage**
**facility with data modules"**
**PATENTS ABSTRACTS OF JAPAN, Band 1, Nr, 50, 16.**
**Mai 1977, Seite 3254E76**

(73) Patentinhaber : **Siemens Aktiengesellschaft**
**Berlin und München Wittelsbacherplatz 2**
**D-8000 München 2 (DE)**

(72) Erfinder : **Schachl, Rudolf**
**Lindenring 36**
**D-8021 Taufkirchen (DE)**

## Beschreibung

Die Erfindung bezieht sich auf eine Magnetkopfhalterung für Plattenspeicher, bei der der den Magnetkopf tragende Flugkörper auf einem kardanisch bewegbaren Blattfederelement befestigt ist, bei der die bei bewegtem Plattenspeicher auftretende Auftriebskraft des Flugkörpers durch einen auf dem Flugkörper sich abstützenden Andruckarm kompensierbar ist, und bei der der im Bereich des Flugkörpers zwischen zwei Begrenzungsflächen verlaufende Andruckarm mit seitlichen Abstützungen versehen ist.

Bei Plattenspeichern besteht das Problem, daß der Magnetkopf einerseits in möglichst geringem Abstand zur Speicherfläche angeordnet sein soll, diese aber andererseits wegen der hohen Plattengeschwindigkeit von mehr als 40 m/sec nicht berühren darf. Der Magnetkopf wird deshalb mit Hilfe eines sogenannten Flugkörpers, der auf einem Luftkissen schwebt, ca. 1 μm über der Plattenoberfläche gehalten. Aufgrund dieser strengen Betriebsbedingungen lassen sich jedoch gegenseitige Berührungen nie ganz verhindern, wobei der Flugkörper durch erhöhte Reibung, durch Festkleben oder Ansprengen auf der Magnetplattenoberfläche in Umfangsrichtung von dieser Magnetplatte mitgerissen wird und zwar so weit, daß der Flugkörper gegen den seine Auftriebskraft kompensierenden Andruckarm stößt. Diese seitliche Verschiebung hat nun zur Folge, daß die den Flugkörper tragende Kardanfeder so stark durchgebogen wird, daß es zu einer schleifenden Berührung zwischen Magnetplatte und Kardanfeder kommt. Neben Beschädigungen der Magnetplatte können auch bleibende Verformungen des Kopfringbleches auftreten, so daß der Magnetkopf nicht mehr einwandfrei funktioniert.

Eine Magnetkopfhalterung der eingangs genannten Art ist durch die Druckschrift IBM JOURNAL OF RESEARCH AND DEVELOPMENT, Band 18, Nr. 6, Nov. 1974, Seiten 489-505 bekannt. Der im Bereich des Flugkörpers zwischen zwei Begrenzungsflächen verlaufende Andruckarm weist seitliche federnde Abstützungen auf, die einmal dazu dienen, den Andruckarm zwischen diesen Begrenzungen zu zentrieren und zum anderen eine Schnappverbindung des Andruckarms mit dem Flugkörper herstellen.

Von dieser bekannten Magnetkopfhalterung ausgehend liegt der vorliegenden Erfindung die Aufgabe zugrunde, die Abstützungen am Andruckarm so zu gestalten, daß zwischen ihnen und den Begrenzungsflächen ein Abstand vorgesehen ist, wobei der dadurch geschaffene Bewegungsspielraum des Flugkörpers variabel justierbar sein soll.

Diese Aufgabe wird dadurch gelöst, daß der Andruckarm zwischen den beiden Begrenzungsflächen frei beweglich ist und die seitlichen Abstützungen des Andruckarms als Laschen so gestaltet sind, daß der Bewegungsspielraum des Flugkörpers nach beiden Seiten hin eingeschränkt ist, wobei die Laschen durch Verbiegen in ihrer Spannweite veränderbar sind.

Vorteilhafte Weiterbildungen der Erfindung sind in den Unteransprüchen angegeben.

Im folgenden wird ein Ausführungsbeispiel der Erfindung anhand der Zeichnung näher erläutert. Es zeigen:

Figur 1 eine Magnetkopfhalterung gemäß der Erfindung in perspektivischer Darstellung,

Figur 2 eine ausschnittweise Vergrößerung eines in der Halterung nach Fig. 1 vorgesehenen Andruckarmes,

Figur 3 einen Schnitt durch den Andruckarm im Bereich des Flugkörpers.

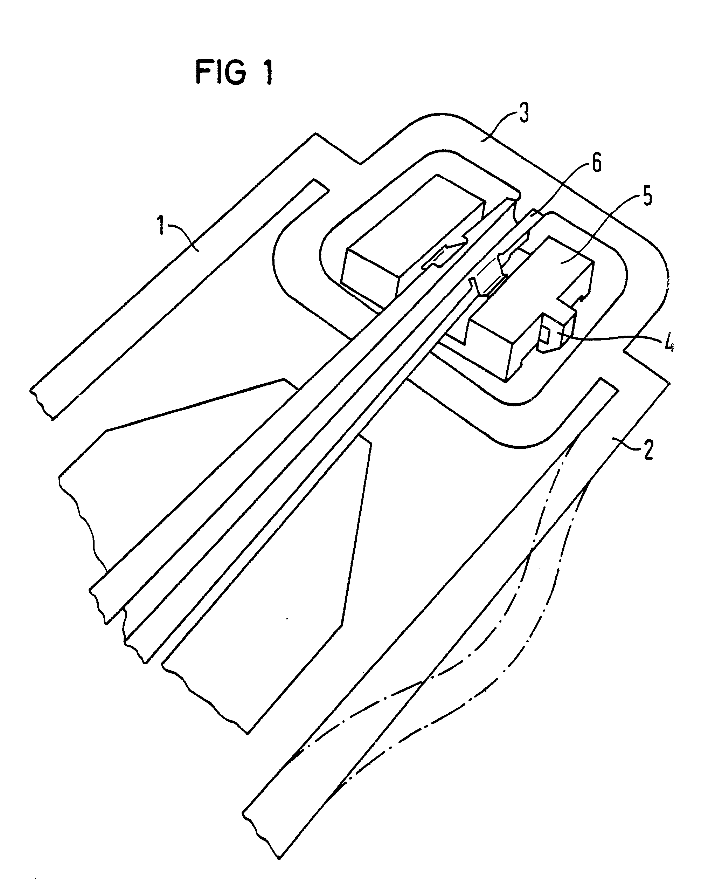

Die in Fig. 1 dargestellte Magnetkopfhalterung zeigt im einzelnen ein Blattfederelement, das aus zwei Längsschenkeln 1, 2 und einem ringförmigen Zwischenstück 3 mit Quersteg besteht. Dieses Blattfederelement bildet eine sogenannte Kardanaufhängung für einen Magnetkopf 4 bzw. für den ihn tragenden Flugkörper 5, der seinerseits am Quersteg des ringförmigen Zwischenstücks 3 befestigt ist. Ferner weist die Halterung einen Andruckarm 6 auf, der die bei rotierendem Plattenspeicher auftretende Auftriebskraft des Flugkörpers 5 durch einen Gegendruck entsprechend kompensiert, wobei der Andruckarm 6 in eine U-förmige Führungsnut 7 im Flugkörper 5 eintaucht.

Wie bereits erwähnt, können wegen des geringen Abstandes zwischen Magnetkopf und Speicherplatte gegenseitige Berührungen nie ganz ausgeschlossen werden, wobei der Flugkörper 5 in Umfangsrichtung der Speicherplatte im Falle einer Berührung gegebenenfalls so weit mitgerissen wird, daß er gegen den Andruckarm 6 stößt. Wenn diese Bewegung groß genug ist, d. h. wenn der Andruckarm 6 genügend Spiel in der Führungsnut 7 hat, führt dies z. B. zu einer Durchbiegung des Längsschenkels 2 (siehe strichpunktierte Linien), so daß die Speicherplatte erneut verkratzt werden kann. Um dies zu verhindern, ist der Andruckarm 6 im Bereich des Flugkörpers 5 mit seitlichen Anschlägen versehen die derart geformt sind, daß der Bewegungsspielraum des Flugkörpers nach beiden Seiten hin eingeschränkt wird.

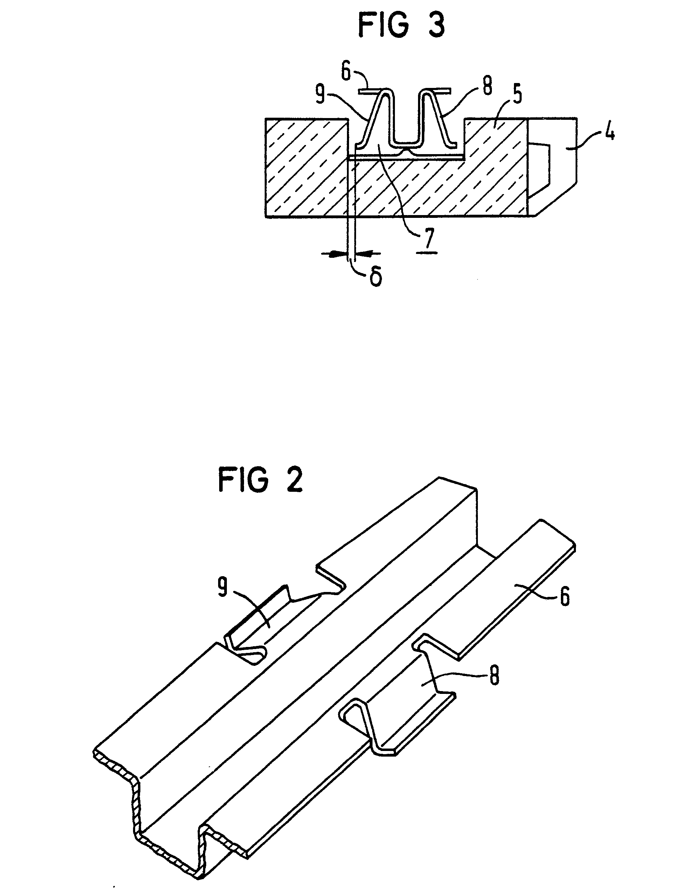

Einzelheiten des Andruckarms 6 gemäß Fig. 1 sind in einem vergrößerten Ausschnitt in Fig. 2 dargestellt. Danach besteht der Andruckarm 6 aus einer U-ähnlich profilierten Metallschiene, deren seitliche, im Bereich des Flugkörpers vorgesehene Anschläge als angesetzte und/oder eingerissene Laschen 8, 9 ausgebildet sind. Im dargestellten Beispiel sind die beiden Laschen 8, 9 durch seitliche Trennstege von der Metallschiene teilweise abgetrennt und mit ihren über das U-Profil hinausragenden freien Enden etwas S-förmig nach unten durchgebogen.

Die in Fig. 3 dargestellte Schnittzeichnung zeigt den Andruckarm 6 im Bereich des Flugkörpers 5, an dessen rechter Seite der Magnetkopf 4 schematisch angedeutet ist. Diese Fig. 3 zeigt sowohl das U-ähnliche Profil des Andruckarms 6 als auch die beiden, jeweils nach unten durchgebogenen Laschen 8, 9, deren frei nach außen gerichtete Enden sich im Bedarfsfalle an der Führungsnut 7 des Flugkörpers 5 abstützen. Die jeweilige Spannweite der Laschen 8, 9, d. h. dazu komplementär der Abstand δ zwischen Laschenaußenkante und Führungsnut kann durch Verbiegen der Laschen in einfacher Weise justiert werden.

**Ansprüche**

1. Magnetkopfhalterung für Plattenspeicher, bei der der den Magnetkopf tragende Flugkörper auf einem kardanisch bewegbaren Blattfederelement befestigt ist, bei der die bei bewegtem Plattenspeicher auftretende Auftriebskraft des Flugkörpers durch einen auf dem Flugkörper sich abstützenden Andruckarm kompensierbar ist, und bei der der im Bereich des Flugkörpers (5) zwischen zwei Begrenzungsflächen verlaufende Andruckarm (6) mit seitlichen Abstützungen versehen ist, dadurch gekennzeichnet, daß der Andruckarm (6) zwischen den beiden Begrenzungsflächen frei beweglich ist und die seitlichen Abstützungen des Andruckarms (6) als Laschen (8, 9) so gestaltet sind, daß der Bewegungsspielraum des Flugkörpers (5) nach beiden Seiten hin eingeschränkt ist, wobei die Laschen (8, 9) durch Verbiegen in ihrer Spannweite veränderbar sind.

2. Magnetkopfhalterung nach Anspruch 1, dadurch gekennzeichnet, daß der Andruckarm (6) aus einem durch Längssicken versteiften Metallband oder dergleichen besteht, dessen Laschen als angesetzte und/oder eingerissene Lappen ausgebildet sind.

3. Magnetkopfhalterung nach einem der vorhergehenden Ansprüche, dadurch gekennzeichnet, daß der Flugkörper (5) eine den Andruckarm (6) aufnehmende Führungsnut (7) aufweist.

**Claims**

1. A magnetic head holder for disc stores, wherein an aerodynamic support for the magnetic head is secured on a flat spring element forming a Cardan mount, wherein the buoyant force of the aerodynamic support which occurs when the disc store is moved is compensated by a pressure arm supported on the aerodynamic support, and wherein the pressure arm (6), which extends between two boundary surfaces in the region of the aerodynamic support (5) is provided with lateral struts, characterised in that the pressure arm (6) is freely movable between the two boundary surfaces and the lateral struts of the pressure arm (6) are constructed as clips (8, 9) in such manner that the clearance of motion of the aerodynamic support (5) is restricted towards both sides, the clips (8, 9) being variable by bending in their width.

2. A magnetic head holder as claimed in Claim 1, characterised in that the pressure arm (6) consists of a metal strip, which is reinforced with longitudinal grooves or the like, the clips of which metal strip are designed as attached and/or spread flaps.

3. A magnetic head holder as claimed in one of the preceding Claims, characterised in that the aerodynamic support (5) has a guide groove (7) which houses the pressure arm (6).

**Revendications**

1. Support de tête magnétique pour mémoire à disque, dans lequel le corps volant qui porte la tête magnétique est fixé sur un élément de ressort à lames déplaçable suivant un mouvement à la Cardan, dans lequel la force ascensionnelle du corps volant qui apparaît lors du déplacement de la mémoire à disques est susceptible d'être compensée par un bras de pression prenant appui sur le corps volant et dans lequel le bras de pression (6) qui s'étend, au niveau du corps volant (5), entre deux surfaces de limitation, est pourvu d'appuis latéraux, caractérisé par le fait que le bras de pression (6) est déplaçable librement entre les deux surfaces de limitation, et que les appuis latéraux du bras de pression (6) constituent des languettes (8, 9) qui sont conformées de telle façon que le débattement du corps volant (5) est limité vers les deux côtés, la distance entre lesdites languettes (8, 9) pouvant être modifiée par déformation de ces dernières.

2. Support de tête magnétique selon la revendication 1, caractérisé par le fait que le bras de pression (6) est constitué par une bande métallique ou similaire, renforcée par des moulures longitudinales, bande métallique dont les languettes sont réalisées sous la forme de pattes rapportées et/ou entaillées.

3. Support de tête magnétique selon l'une des revendications précédentes, caractérisé par le fait que le corps volant (5) comporte une gorge de guidage (7) qui reçoit le bras de pression (6).

# FIG 1

# FIG 3

# FIG 2